# EUROPEAN PATENT SPECIFICATION

(11) **EP 2 099 240 B1**
(45) Date of publication and mention of the grant of the patent: **12.05.2010**
(21) Application number: 08290213.1
(22) Date of filing: 04.03.2008
(51) Int. Cl.: H04W 64/00

(54) **Location service for indoor wireless mobile systems**
Lokalisierungsdienst für drahtlose mobile Systeme in Gebäuden
Service de localisation pour systèmes mobiles d'intérieur sans fil

(43) Date of publication of application: 09.09.2009
(73) Proprietor: Alcatel, 75008 Paris (FR)
(72) Inventor: Fahldieck, Torsten, 71254 Ditzingen (DE); Cesar, Bozo, 70439 Stuttgart (DE)
(74) Representative: Schmidt, Werner Karl

(56) References cited:
- EP-A- 1 448 008
- US-A1- 2002 167 417
- DI FLORA C ET AL: "Indoor and Outdoor Location Based Services for Portable Wireless Devices" 6 June 2005 (2005-06-06), DISTRIBUTED COMPUTING SYSTEMS WORKSHOPS, 2005. 25TH IEEE INTERNATIONAL CONFERENCE ON COLUMBUS, OH, USA 06-10 JUNE 2005, PISCATAWAY, NJ, USA,IEEE, PAGE(S) 244 - 250 , XP010808062 ISBN: 978-0-7695-2328-6 * abstract * * page 2, paragraph 2 * * page 4, paragraph 4.2 *
- KRISHNAN P ET AL: "A system for LEASE: Location estimation assisted by stationary emitters for indoor RF wireless networks" INFOCOM 2004. TWENTY-THIRD ANNUALJOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, vol. 2, 7 March 2004 (2004-03-07), pages 1001-1011, XP010740846 ISBN: 978-0-7803-8355-5

## Description

### Technical field

The invention relates to a method location for indoor mobile wireless system and more specifically for a location service for indoor WiMAX systems, to a Remote Radio Headend and to a computer program product.

### Background and related art

In order to provide in-building or indoor coverage for wireless networks services like GSM, UMTS, CDMA or WiMax special deployments are needed. Compared to typical outdoor deployments where a base station with an attached antenna system covers a limited area or cell, an indoor system consists of one or more base stations with one or more detached remote antenna systems or radio remote headends (RRH). The base station is installed inside or outside the building or the indoor location, and the remote antenna systems are attached at different locations inside the building.

Connected to the base station, the base station interface (BSI) during downlink, converts the digitized radio frequency data from a base station internal format into an Ethernet standard compliant format. The data is then transported trough a Gigabit Ethernet Network to the remote antenna systems or radio remote headend (RRH). A similar reverse process is repeated by the BSI during uplink transmission.
The Gigabit Ethernet Network is one of the most appropriate transmission networks to communicate the base station interface with the remote antenna systems, due to its cost efficiency and high data rated compared to other technologies.

EP 1 448 008 A1 relates to indoor positioning of mobile terminals. In an indoor communications environment a plurality of distributed antennas, which are grouped into two or more antenna subsets, cover different geographical indoor sectors. To each antenna subset an identification parameter is assigned that denotes the sector covered by a particular antenna subset. A network node receives via a common signal path of the antennas a signal including identification information relating to the identification parameter that is assigned to the antenna subset that has received the signal. On the basis of said identification information included in the signal a mobile terminal is located.

There is therefore a need of a method of locating a mobile station in indoor wireless communication system, of a remote radio headend and a computer program product to perform the method in accordance with the invention.

This object and other objects are solved by the features of the independent claims.
Preferred embodiments of the invention are described by the features of the dependent claims.

### Summary

A method of locating a mobile station in a wireless indoors communication system, the wireless indoors communication system further comprising a plurality of remote radio headends coupled to a base station, a mobile station being coupled to at least a first remote radio headend of the plurality of remote radio headends, the plurality of remote radio headends being adapted for expanding wireless coverage of the base station, the method comprising the steps of: sending a sounding signal request from the base station to the mobile station; receiving the sounding signal request by the mobile station and sending a sounding signal from the mobile station to the first remote radio headend; and receiving the sounding signal by the first remote radio headends and obtaining an stamped sounding signal by multiplying the sounding signal with a first filter, wherein the first filter comprises a unique first filter's transfer function of the first remote radio headend. The method further comprises: sending the stamped sounding signal by the remote radio headend to the base station, wherein the stamped sounding signal contains at least a sub-carrier or a sub-channel (or sub-carrier) attenuated by the first filter; receiving the stamped sounding signal by the base station and comparing the stamped sounding signal with a database, the database comprising a list of the plurality of remote radio headends with an assigned unique transfer function for each remote radio headend and a location of the first remote radio headend within an indoors infrastructure; and identifying the first remote radio headend communicating with the first mobile station, the identification including an approximate location of the mobile station.

The main advantage of the embodiments is that after receiving a stamped message from the remote radio headend, after filtering the sounding message from the mobile station, the base station is able to identify what remote radio headend the mobile station is communicating with. The base station also contains a database with the information regarding the location of all remote radio headends within the building or the infrastructure, so that an approximate location of the mobile station is possible.

In another embodiment, the first filter's transfer function and any second filter's transfer function have at least one sub-carrier or one sub-channel (or sub-carrier) gap separation. The wireless indoors communication system complies for example with the IEEE 802.16 standards. The wireless indoors communication system uses as PUSC and AMC as permutation modes. The station receives from each remote radio headend an individual power distribution of sub-carriers that form the sub-channels, including the attenuated sub-channel (or sub-carrier).

In another aspect, the invention relates to a first remote radio headend in a in a wireless indoors communication system, the wireless indoors communication system further comprising a plurality of remote radio headends coupled to a base station including the first remote radio headend, a mobile station being coupled to at least the first remote radio headend, the plurality, of remote radio headends being adapted for expanding wireless coverage of the base station, the first remote base station comprises:
means for sending a sounding signal request originated on the base station to the mobile station; means for receiving the sounding signal from the mobile station; means for obtaining an stamped sounding signal by multiplying the sounding signal with a first filter's transfer function, wherein the first filter's transfer function is a unique transfer function of the first remote radio headend. The first remote radio headend further comprises: means for sending the stamped sounding signal by the remote radio headend to the base station for comparison with a database by the base station, the database comprising a list of the plurality of remote radio headends with an assigned unique transfer function for each remote radio headend and a location of the first remote radio headend within an indoors infrastructure, wherein the stamped sounding signal contains at least a sub-carrier or a subchannel attenuated by the first filter.

In further embodiments, the first filter's transfer function and any second filter's transfer function of the remote radio headend have at least one sub-channel gap separation. The base station receives from each remote radio headend an individual power distribution of sub-carriers that form the sub-channels, including the attenuated sub-channel. The first filter's transfer function attenuates the sub-channel of the sounding signal.

In another aspect, the invention relates to a computer program product stored on a computer usable medium, comprising computer readable program means for causing a computer to perform a method according to any of the embodiments when the program is run on the computer. The computer may be located in the base station.

### Brief description of the drawings

In the following preferred embodiments of the invention are described in greater detail by way of example only making reference to the drawings in which:
- Figure 1: shows an example of a mobile wireless indoor system,
- Figure 2: shows a Remote Radio Headend,
- Figure 3: shows an example of a plurality of sub-channels and sub-carriers,
- Figure 4: shows a flowchart of a method according to an embodiment,
- Figure 5: depicts another Remote radio headend.

### Detailed description

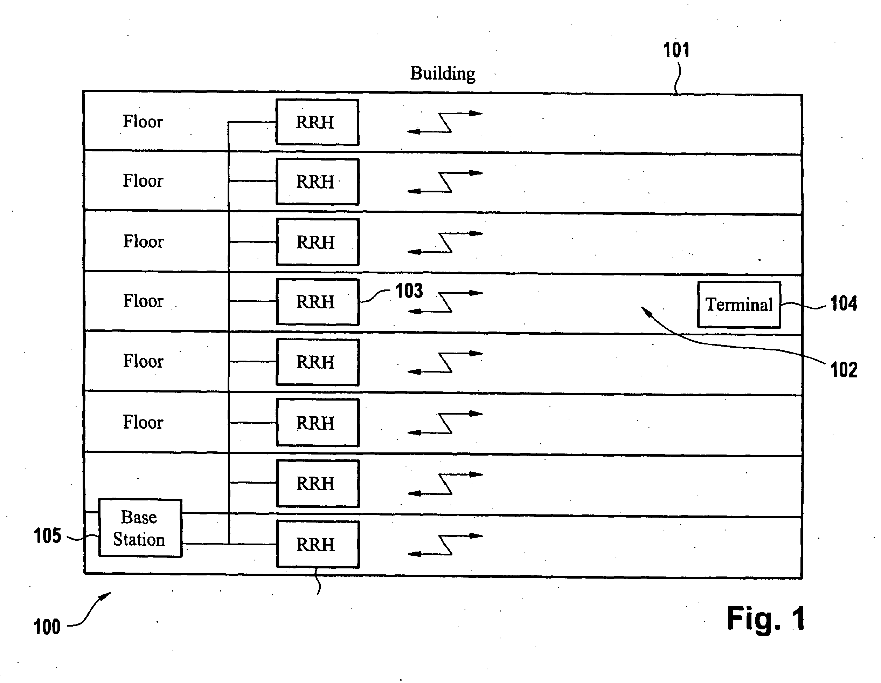

Fig. 1 shows an example of an indoors wireless mobile communication system 100 comprising a building 101 and a plurality of floors (that can be also rooms) including floor 102, a plurality of Remote Radio Headends including Remote Radio Headend 103, a mobile station 104 within the floor 102 and a base station 105.

When a terminal or a mobile station as mobile station 104 communicates with a base station 105 through one of the plurality of Remote Radio Headends 103, the embodiments allow identifying what Remote Radio Headend the mobile station 104 is being used to communicate, so that the base station 105 can identify on what floor of a building or on what room or zone a terminal is located. In order to make the Remote Radio Headends identification possible, a filter with a unique transfer function is used on every Remote Radio Headend, so that during the sounding phase in which a terminal transmit a sounding message over a predefined set of sub-carriers, the Remote Radio Headend multiplies the received sounding sequence from the terminal by its specific filter transfer function.

The advantage of the embodiments is that the base station 105 receives the signal from the Remote Radio Headend and using a database that stores all the filter transfer functions, it checks and matches what filter function was used, and as a consequence, what Remote Radio Headend was communicating with the terminal. With that information, the base station may have stored in the second database the current location of the Remote Radio Headends, so that the floor, the room or the zone covered by the Remote . Radio Headend is identified, and therefore, an approximate location of the mobile station.

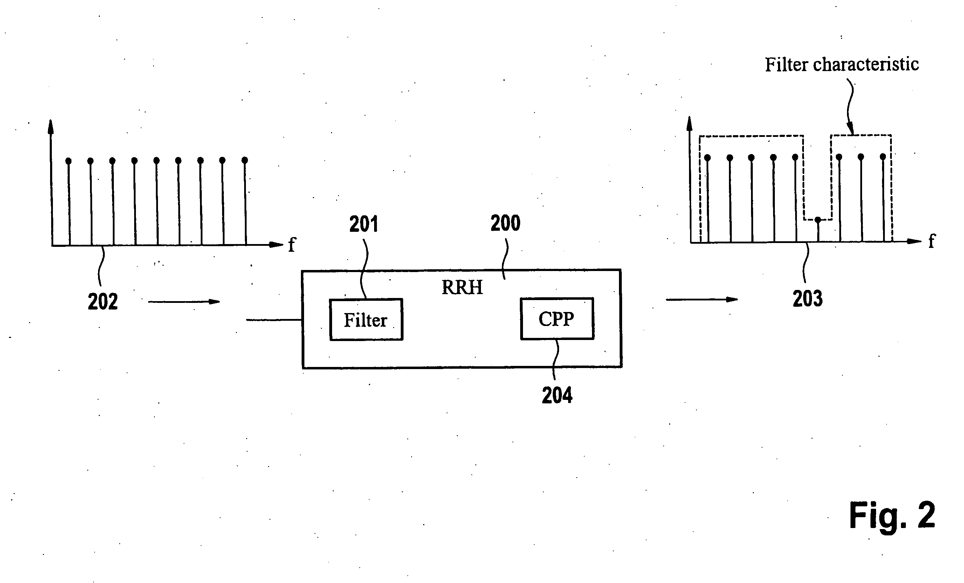

Fig. 2 shows an example of a Remote Radio Headend 200 comprising a filter 201 and with ain input signal 202, an output signal 203 and a computer program product 204. The Remote Radio Headend 200 and the Remote Radio Headend 103 of fig. 1 may be the same Radio Headend.

In the deployment of Remote Radio Headends, one or more RRH may be located on every floor of a building, which are all connected to one base station. When a service is required to identify a possible location of the terminal within a floor or any indoors infrastructure, as for example during an emergency call, the wireless indoors system may send an MAC management message which request the terminal to transmit a sounding sequence on a set of OFDMA sub-carriers. When the Remote Radio Headend 200 receives the sounding message 202, it applies a unique filter 201 to the received sounding message, and then sends this to the base station 105.

The filter can be implemented in such a way that the sounding message is attenuated in a specific sub-channel, and only that sub-channel is attenuated for a specific Remote Radio Headend. The base station 105 receives the sounding message 203 and measures the frequency response of the channel between the terminal and the base station. According to this information, a database within the base station contains information about all the Remote Radio Headend coupled to the base station 105, including the filter characteristics and location information for each Remote Radio Headend. This data is reconfigured at the system setup. Using the received sounding message and the information of the database, the base station 105 is able to obtain an approximate location of the terminal within the indoor infrastructure.

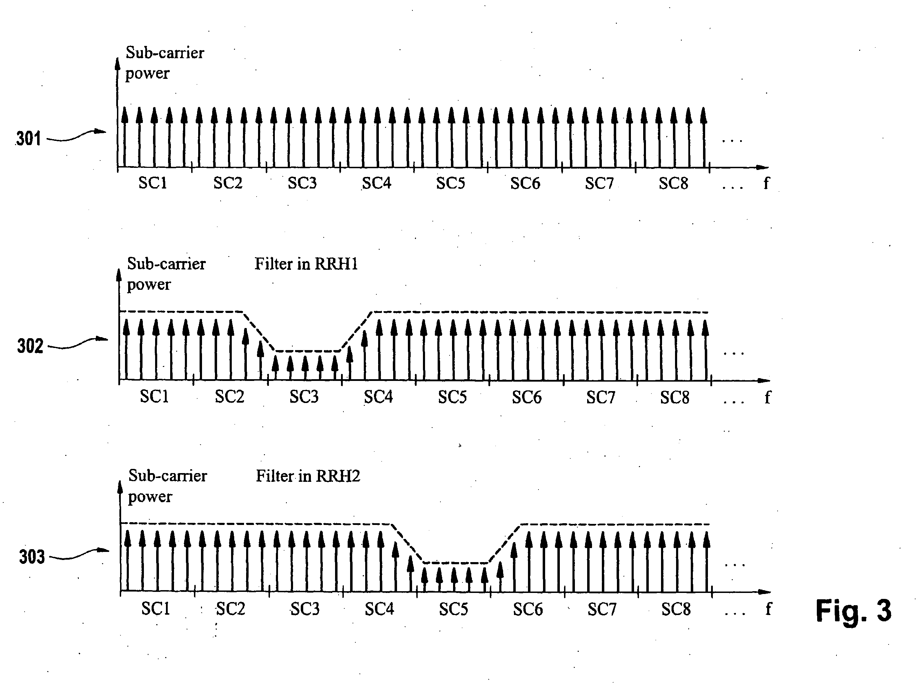

Fig. 3 shows a more detailed example of the message received by the Remote Radio Headend and the filter applied by a first and a second Remote Radio Headend RH1 and RH2. The graph 301 describes eight sub-channels and five sub-carriers for each sub-channel and represents the signal that is received by the remote radio headend from the mobile station. The graph 302 describes the output of the signal after the first Remote Radio Headend RRH1 has applied its unique first filter that attenuates the third sub-channel SC3. The third graph 303 shows the output signal of the Remote Radio Headend after a unique second filter has been applied for the RRH2, attenuating the fifth sub-channel SC5. It is recommended that a gap is introduced between the transfer functions of the filters of each Remote Radio Headend, so that the identification is simplified on the base station. In this example, a database in the base station contains the information regarding the RRH1 and RRH2 including the filter that these two Remote Radio Headends use in order to identify themselves, so that for example the RH1 will always attenuate the third sub-channel SC3 and the RH2 always attenuates the fifth sub-channel SC5.

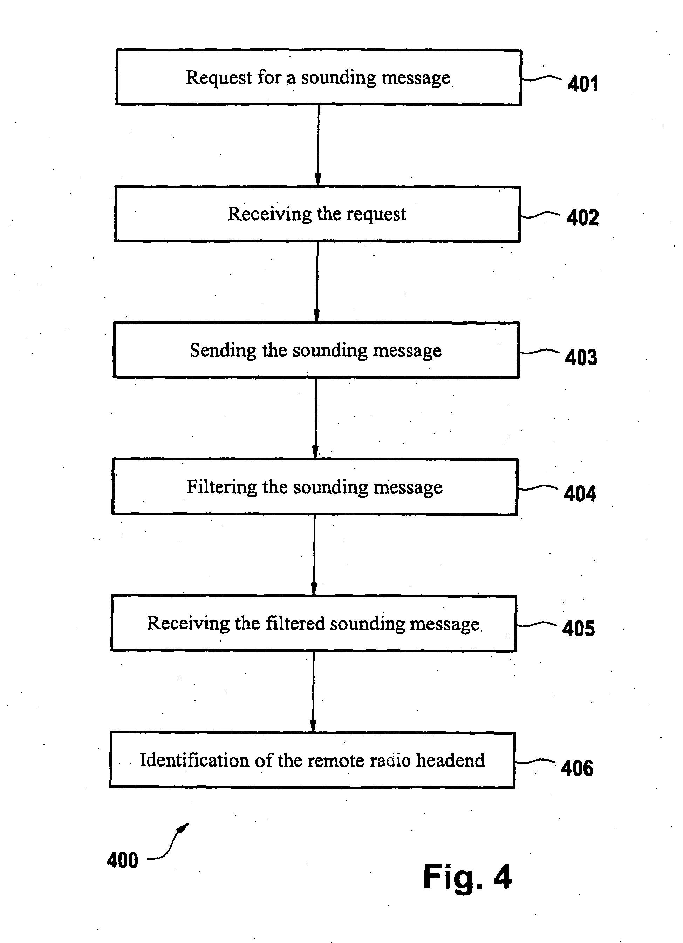

Fig. 4 shows a flowchart of a method of locating a terminal within an indoors mobile communication system that comprises a first step 401 where a request for a sounding sequence is sent to the terminal. The second step 402 where the terminal receives the request. The third step 403, when the terminal sends a sounding signal and the Remote Radio Headend receives the sounding signal. The forth step 404, the RRH multiplies the received sounding signal and multiplies it by a filter within a specific transfer function. In the fifth step 405, a base station receives the filter sounding signal. The sixth step 406, the base station compares the received signal with a database in order to identify the source of the Remote Radio Headend and an approximate location of the terminal within the indoors infrastructure.

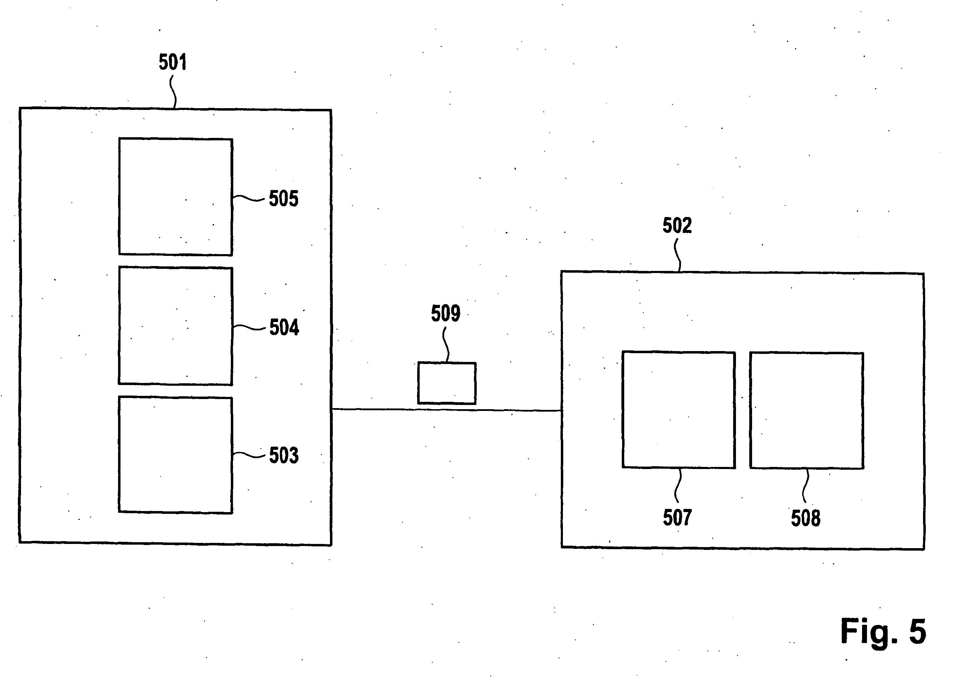

Fig. 5 depicts an example of a remote radio headend 501 and a base station 502. The remote radio headend comprises: means for 503 sending a sounding signal request originated on the base station to the mobile station; means for 504 receiving the sounding signal from the mobile station; means for 505 obtaining an stamped sounding signal by multiplying the sounding signal with a first filter's transfer function, wherein the first filter's transfer function is a unique transfer function of the first remote radio headend; and means for 505 sending the stamped sounding signal to the base station, wherein the stamped sounding signal contains a sub-channel attenuated by the fitter.

The base station 502 comprises a database 507 including a list of the plurality of remote radio headends with an assigned unique transfer function for each remote radio headend and a location of the first remote radio headend within an indoors infrastructure and means for 508 comparing the stamped sounding signal with the database.

### List of Reference Numerals

| | |
|---|---|
| 100 | Wireless indoor system |
| 101 | Building |
| 102 | Floor (or room) |
| 103 | RRH |
| 104 | Mobile station |
| 105 | Base station |
| 200 | RRH |
| 201 | Filter |
| 202 | Input signal |
| 203 | Output signal |
| 204 | CPP |
| 301 | First graph |
| 302 | Second graph |
| 303 | Third graph |
| 401 | First step |
| 402 | Second step |
| 403 | Third step |
| 404 | Forth step |
| 405 | Fifth step |
| 406 | Sixth step |
| 501 | RRH |
| 502 | Base station |
| 503 | Means for sending |
| 504 | Means for receiving |
| 505 | Means for obtaining |
| 507 | Database |
| 508 | Means for comparing |

## Claims

1. A method of locating a mobile station (104) in a OFDMA wireless mobile indoors communication system (100), said wireless mobile indoors communication system (100) further comprising a plurality of remote radio headends coupled to a base station (105), said mobile station (105) being coupled to at least a first remote radio headend (103) of said plurality of remote radio headends, said plurality of remote radio headends being adapted for expanding wireless coverage of the base station, said method comprising the steps of:
- sending a sounding signal request from said base station to said mobile station;
- receiving said sounding signal request by said mobile station and sending a sounding signal from said mobile station to said first remote radio headend;
- receiving said sounding signal (202) by said first remote radio headend (103) and obtaining an stamped sounding signal (203) by multiplying said sounding signal with a first filter (201), wherein said first filter (201) comprises a unique first filter's transfer function of said first remote radio headend (103);
- sending said stamped sounding signal (203) by said first remote radio headend (103) to said base station (105), wherein said stamped sounding signal (203) contains at least a sub-carrier attenuated by said first filter (201);
- receiving said stamped sounding signal (203) by said base station (105) and comparing said stamped sounding signal (203) with a database, said database comprising a list of said plurality of remote radio headends with an assigned unique transfer function for each remote radio headend and a location of said first remote radio headend (103) within an indoors infrastructure ;
- identifying said first remote radio headend (103) communicating with said mobile station (104), said identification including an approximate location of said mobile station (104).

2. The method of claim 1, wherein said first filter's transfer function and any second filter's transfer function have at least one sub-channel gap separation.

3. The method of claim 1 and 2, wherein said wireless indoors communication system complies with the IEEE 802.16 standards.

4. The method of any previous claims, wherein said wireless indoors communication system uses as PUSC and AMC as permutation modes and wherein said filter attenuates a complete sub-carrier.

5. The method of any previous claims, wherein said base station receives from each remote radio headend an individual power distribution of sub-carriers that form said sub-channels, including said attenuated sub-channel.

6. A remote radio headend (501) in an OFDMA wireless mobile indoors communication system, said wireless mobile indoors communication system (100) further comprising a plurality of remote radio headends coupled to a base station (502) including said remote radio headend (501), a mobile station (104) being coupled to at least said remote radio headend (501), said plurality of remote radio headends being adapted for expanding wireless coverage of the base station, said remote radio headend comprising:
- means for (503) sending a sounding signal request originated on said base station to said mobile station;
- means for (504) receiving said sounding signal from said mobile station;
- means for (505) obtaining an stamped sounding signal (509) by multiplying said sounding signal with a filter's transfer function, wherein said filter's transfer function is a unique transfer function of said remote radio headend;
- means for (505) sending said stamped sounding signal (509) by said remote radio headend (501) to said base station (502) for comparison with a database (507) by said base station (502), said database comprising a list of said plurality of remote radio headends with an assigned unique transfer function for each remote radio headend and a location of said remote radio headend within an indoors infrastructure, wherein said stamped sounding signal contains at least a sub-carrier attenuated by said filter.

7. The remote radio headend of claim 6, wherein said filter's transfer function and any second filter transfer function have at least one sub-channel gap separation.

8. The remote radio headend of claim 6 and 7, wherein said remote radio headend (501) comprises means for sending to the base station (502) an individual power distribution of sub-carriers that form said sub-channels, including said attenuated sub-carrier.

9. The remote radio headend of claim 6, 7 or 8, wherein said filter's transfer function attenuates said sub-carrier(s) of said sounding signal.

10. A computer program product stored on a computer usable medium, comprising computer readable program means for causing a computer to perform the steps of a method according to any of the preceding claims 1 to 5 when said program is run on said computer.

## Patentansprüche

1. Ein Verfahren zum Lokalisieren einer Mobilstation (104) in einem drahtlosen mobilen OFDMA-Kommunikationssystem (100) in Gebäuden, wobei das drahtlose mobile Kommunikationssystem (100) in Gebäuden weiterhin eine Vielzahl von entfernten Funk-Kopfstationen umfasst, welche an eine Basisstation (105) gekoppelt sind, wobei die besagte Mobilstation (104) an mindestens eine erste entfernte Funk-Kopfstation (103) der Vielzahl von entfernten Funk-Kopfstationen gekoppelt ist, wobei die besagte Vielzahl von entfernten Funk-Kopfstationen dazu ausgelegt ist, die drahtlose Abdeckung der Basisstation auszuweiten, wobei das besagte Verfahren die folgenden Schritte umfasst:
- Senden einer Sondierungssignal-Anforderung von der besagten Basisstation an die besagte Mobilstation;
- Empfangen der besagten Sondierungssignal-Anforderung an der besagten Mobilstation, und Senden eines Sondierungssignals von der besagten Mobilstation an die besagte erste entfernte Funk-Kopfstation;
- Empfangen des besagten Sondierungssignals (202) an der besagten ersten entfernten Funk-Kopfstation (103), und Erhalten eines markierten Sondierungssignals (203) durch Multiplizieren des besagten Sondierungssignals mit einem ersten Filter (201), wobei der erste Filter (201) eine eindeutige Übertragungsfunktion des ersten Filters der besagten ersten entfernten Funk-Kopfstation (103) umfasst;
- Senden des besagten markierten Sondierungssignals (203) durch die besagte erste entfernte Funk-Kopfstation (103) an die besagte Basisstation (105), wobei das markierte Sondierungsslgnal (203) mindestens einen von dem besagten ersten Filter (201) gedämpften Subträger enthält;
- Empfangen des besagten markierten Sondierungssignals (203) an der besagten Basisstation (105), und Vergleichen des besagten markierten Sondierungssignals (203) mit einer Datenbank, wobei die besagte Datenbank eine Liste der besagten Vielzahl von entfernten Funk-Kopfstationen mit einer zugewiesenen eindeutigen Übertragungsfunktion für jede entfernte Funk-Kopfstation und eine Position der besagten ersten entfernten Funk-Kopfstation (103) innerhalb einer Infrastruktur in Gebäuden enthält;
- Identifizieren der besagten ersten entfernten Funk-Kopfstation (103), welche mit der besagten Mobilstation (104) kommuniziert, wobei die besagte Identifikation eine ungefähre Position der besagten Mobilstation (104) umfasst.

2. Das Verfahren nach Anspruch 1, wobei die Übertragungsfunktion des besagten ersten Filters und die Übertragungsfunktion eines zweiten Filters mindestens einen Subkanalabstand haben.

3. Das Verfahren nach Anspruch 1 und 2, wobei das besagte drahtlose Kommunikationssystem in Gebäuden den Normen IEEE 802.16 entspricht.

4. Das Verfahren nach einem beliebigen der vorstehenden Ansprüche, wobei das besagte drahtlose Kommunikationssystem in Gebäuden PUSC und AMC als Permutationsmodi verwendet, und wobei der besagte Filter einen kompletten Subträger dämpft.

5. Das Verfahren nach einem beliebigen der vorstehenden Ansprüche, wobei die besagte Basisstation von jeder entfernten Funk-Kopfstation eine individuelle Leistungsverteilung von Subträgern, welche die besagten den gedämpften Subkanal umfassenden Subkanäle bilden, empfängt.

6. Eine entfernte Funk-Kopfstation (501) in einem drahtlosen mobilen OFDMA-Kommunikationssystem in Gebäuden, wobei das besagte drahtlosen Kommunikationssystem (100) in Gebäuden weiterhin eine Vielzahl von an eine Basisstation (502) gekoppelten entfernten Funk-Kopfstationen, einschließlich der besagten entfernten Funk-Kopfstation (501), umfasst, wobei eine Mobilstation (104) an mindestens die besagte entfernte Funk-Kopfstatlon (501) gekoppelt ist, wobei die besagte Vielzahl von entfernten Funk-Kopfstationen dazu ausgelegt ist, die drahtlose Abdeckung der Basisstation auszuweiten, wobei die besagte entfernte Funk-Kopfstation umfasst:
- Mittel (503) zum Senden einer an der besagten Basisstation ausgegebenen Sondierungssignal-Anforderung an die besagte Mobilstation;
- Mittel (504) zum Empfangen des besagten Sondierungssignals von der besagten Mobilstation:
- Mittel (505) zum Erhalten eines markierten Sondierungssignals (509) durch Multiplizieren des besagten Sondierungssignals mit der Übertragungsfunktion eines Filters, wobei die Übertragungsfunktion des besagten Filters eine eindeutige Übertragungsfunktion der besagten entfernten Funk-Kopfstation ist;
- Mittel (505) zum Senden des besagten markierten Sondierungssignals (509) durch die besagte entfernte Funk-Kopfstation (501) an die besagte Basisstation (502) zum Vergleichen mit einer Datenbank (507) durch die besagte Basisstation (502), wobei die besagte Datenbank eine Liste der besagten Vielzahl von entfernten Funk-Kopfstationen mit einer zugeordneten eindeutigen Übertragungsfunktion für jede entfernte Funk-Kopfstation und eine Position der besagten entfernten Funk-Kopfstation Innerhalb der Gebäude-Infrastruktur enthält, wobei das besagte markierte Sondierungssignal mindestens einen von dem besagten Filter gedämpften Subträger enthält.

7. Die entfernte Funk-Kopfstation nach Anspruch 6, wobei die Übertragungsfunktion des besagten ersten Filters und die Übertragungsfunktion eines beliebigen zweiten Filters mindestens einen Subkanalabstand haben.

8. Die entfernte Funk-Kopfstation nach Anspruch 6 und 7, wobei die besagte entfernte Funk-Kopfstation (501) Mittel zum Senden einer individuellen Leistungsvertellung von Subträgern, welche die besagten Subkanäle bilden, einschließlich des besagten gedämpften Subträgers, an die Basisstation (502) umfasst.

9. Die entfernte Funk-Kopfstation nach Anspruch 6, 7 oder 8, wobei die Übertragungsfunktion des besagten Filters den/die besagten Subträger des besagten Sondierungssignals dämpft.

10. Ein Computerprogramm-Produkt, welches auf einem computerverwendbaren Medium gespeichert ist und computerlesbare Programmmittel umfasst, um den Computer anzuweisen, die Schritte eines Verfahrens nach einem beliebigen der vorstehenden Ansprüche 1 bis 5 durchzuführen, wenn das Programm auf dem besagten Computer ausgeführt wird.

## Revendications

1. Procédé de localisation d'une station mobile (104) dans un système de communications intérieur mobile sans fil OFDMA (100), ledit système de communications intérieur mobile sans fil (100) comprenant en outre une pluralité de têtes de réseau radio à distance couplées à une station de base (105), ladite station mobile (104) étant couplée à au moins une première tête de réseau radio à distance (103) de ladite pluralité de têtes de réseau radio à distance, ladite pluralité de têtes de réseau radio à distance étant adaptée pour étendre la couverture sans fil de la station de base, ledit procédé comprenant les étapes suivantes :
- envoi d'une requête de signal sonore de ladite station de base à ladite station mobile ;
- réception de ladite requête de signal sonore par ladite station mobile et envoi d'un signal sonore de ladite station mobile à ladite première tête de réseau radio à distance ;
- réception dudit signal sonore (202) par ladite première tête de réseau radio à distance (103) et obtention d'un signal sonore estampillé (203) en multipliant ledit signal sonore par un premier filtre (201), dans lequel ledit premier filtre (201) comprend une fonction unique de transfert de premier filtre de ladite première tête de réseau radio à distance (103) ;
- envoi dudit signal sonore estampillé (203) par ladite première tête de réseau radio à distance (103) à ladite station de base (105), dans lequel ledit signal sonore estampillé (203) contient au moins une sous-porteuse atténuée par ledit premier filtre (201) ;
- réception dudit signal sonore estampillé (203) par ladite station de base (105) et comparaison dudit signal sonore estampillé (203) à une base de données, ladite base de données comprenant une liste de ladite pluralité de têtes de réseau radio à distance et de la fonction de transfert unique assignée à chaque tête de réseau radio à distance et une localisation de ladite première tête de réseau radio à distance (103) dans une infrastructure intérieure ;
- identification de ladite première tête de réseau radio à distance (103) en communication avec ladite station mobile (104), ladite identification incluant une localisation approximative de ladite station mobile (104).

2. Procédé selon la revendication 1, dans lequel ladite fonction de transfert de premier filtre et la fonction de transfert d'un quelconque second filtre ont au moins un intervalle de séparation de voie intermédiaire.

3. Procédé selon la revendication 1 ou 2, dans lequel ledit système de communications intérieur sans fil est conforme à la norme IEEE 802.16.

4. Procédé selon l'une quelconque des revendications précédentes, dans lequel ledit système de communications intérieur sans fil utilise les modes de permutation PUSC et AMC et dans lequel ledit filtre atténue une sous-porteuse entière.

5. Procédé selon l'une quelconque des revendications précédentes, dans lequel ladite station de base reçoit de chaque tête de réseau radio à distance une répartition de puissance individuelle des sous-porteuses qui forment lesdites voles intermédiaires, y compris ladite sous-porteuse atténuée.

6. Tête de réseau radio à distance (501) dans un système de communications intérieur mobile sans fil OFDMA, ledit système de communications intérieur mobile sans fil (100) comprenant en outre une pluralité de têtes de réseau radio à distance couplées à une station de base (502) comprenant ladite tête de réseau radio à distance (501), une station mobile (104) étant couplée à au moins ladite tête de réseau radio à distance (501), ladite pluralité de têtes de réseau radio à distance étant adaptée pour étendre la couverture sans fil de la station de base, ladite tête de radio à distance comprenant :
- moyens (503) pour envoyer une requête de signal sonore de ladite station de base à ladite station mobile ;
- moyens (504) pour recevoir ledit signal sonore depuis ladite station mobile ;
- moyens (505) pour obtenir un signal sonore estampillé (509) en multipliant ledit signal sonore par une fonction de transfert de filtre, dans laquelle ladite fonction de transfert de filtre est une fonction unique de transfert de ladite tête de réseau radio à distance;
- moyens (505) pour envoyer ledit signal sonore estampillé (509) par ladite tête de réseau radio à distance (501) à ladite station de base (502) pour une comparaison avec une base de données (507) par ladite station de base (502), ladite base de données comprenant une liste de ladite pluralité de têtes de réseau radio à distance et de la fonction de transfert unique assignée à chaque tête de réseau radio à distance et une localisation de ladite tête de réseau radio à distance dans une infrastructure intérieure, dans laquelle ledit signal sonore estampillé contient au moins une sous-porteuse atténuée par ledit filtre.

7. Tête de réseau radio à distance selon la revendication 6, dans laquelle ladite fonction de transfert de filtre et la fonction de transfert d'un quelconque second filtre ont au moins un intervalle de séparation de vole intermédiaire.

8. Tête de réseau radio à distance selon la revendication 6 ou 7, dans laquelle ladite tête de réseau radio à distance (501) comprend des moyens pour envoyer à la station de base (502) une répartition de puissance individuelle des sous-porteuses qui forment lesdites voies intermédiaires, y compris ladite sous-porteuse atténuée.

9. Tête de réseau radio à distance selon la revendication 6, 7 ou 8, dans laquelle ladite fonction de transfert de filtre atténue la/lesdite(s) sous-porteuse(s) dudit signal sonore..

10. Produit de programme informatique stocké sur un support lisible par ordinateur, comprenant des moyens à code de programme informatique lisibles par ordinateur pour provoquer l'exécution par un ordinateur des étapes d'un procédé selon l'une quelconque des revendications précédentes 1 à 5 lorsque ledit programme est exécuté sur ledit ordinateur.
